# EUROPÄISCHE PATENTANMELDUNG

(11) **EP 1 037 349 A2**
(43) Veröffentlichungstag der Anmeldung: **20.09.2000**
(21) Anmeldenummer: 00400472.7
(22) Anmeldetag: 21.02.2000
(51) Int. Cl.: H02G 1/12

(54) **Vorrichtung zum Bearbeiten des Endes eines koaxialen Hochfrequenz-Kabels**

(30) Priorität: 18.03.1999 DE 19911903
(71) Anmelder: ALCATEL, 75008 Paris (FR)
(72) Erfinder: Greiner, Martin, Dipl.-Ing., 30966 Hemmingen (DE); Bergmann, Detlef, 30853 Langenhagen (DE); Ahrens, Günter, Dipl.-Ing., 30853 Langenhagen (DE); Nagel, Reimer, Dr.-Ing., 30457 Hannover (DE)
(74) Vertreter: Döring, Roger, Dipl.-Ing.

(57) **Zusammenfassung**

Es wird eine Vorrichtung zum Bearbeiten des Endes eines koaxialen Hochfrequenz-Kabels angegeben, das einen rohrförmigen Innenleiter, ein denselben umgebendes Dielektrikum, einen über demselben konzentrisch zum Innenleiter angeordneten, rohrförmigen Außenleiter und einen den Außenleiter umgebenden Mantel aus Isoliermaterial aufweist. Die Vorrichtung besteht aus einem topfartigen Gerät (1) mit einem zylindrischen Hohlraum (2), dessen Durchmesser (D1) am Eingangsbereich dem Durchmesser des Hochfrequenz-Kabels einschließlich Mantel entspricht. Innerhalb des Geräts (1) ist am Ende des Eingangsbereichs mindestens ein zum Durchtrennen des Mantels bestimmtes Mantelmesser (5) angebracht, das mit seiner Schneide in den Hohlraum (2) hineinragt. Der Durchmesser (D2) des Hohlraums (2) hinter dem Eingangsbereich entspricht dem Außendurchmesser des Außenleiters des Hochfrequenz-Kabels. Am verschlossenen Ende des Geräts (1) ist mindestens ein Messer (6,7) angebracht, dessen Schneide zum Durchtrennen von Außenleiter, Dielektrikum und Innenleiter des Hochfrequenz-Kabels in den Hohlraum (2) hineinragt. Zentral im Hohlraum (2) ist ein sich in dessen Achsrichtung erstreckender, zylindrischer Stift (8) drehbar gelagert, dessen Außendurchmesser dem Innendurchmesser des hohlen Innenleiters des Hochfrequenz-Kabels entspricht.

## Beschreibung

Die Erfindung bezieht sich auf eine Vorrichtung zum Bearbeiten des Endes eines koaxialen Hochfrequenz-Kabels, das einen rohrförmigen Innenleiter, ein denselben umgebendes Dielektrikum, einen über demselben konzentrisch zum Innenleiter angeordneten, rohrförmigen Außenleiter und einen den Außenleiter umgebenden Mantel aus Isoliermaterial aufweist.

Eine derartige Vorrichtung wird mit Vorteil am Montageort eingesetzt, an dem koaxiale Hochfrequenz-Kabel (HF-Kabel) durchverbunden oder an Geräte, wie Sender und Empfänger, angeschlossen werden sollen. Für diesen Anschluß werden in heutiger Technik Stecker mit Außenhülse und Innenstift verwendet, die nach Montage elektrisch leitenden Kontakt zum Außenleiter und zum Innenleiter des HF-Kabels haben. Dazu muß das Ende des HF-Kabels so gestaltet sein, daß der erforderliche elektrische Kontakt hergestellt werden kann. Beim Innenleiter des HF-Kabels ist das kein Problem. Der Außenleiter desselben muß hingegen erst metallisch blank gemacht werden. Dazu wird der den Außenleiter umgebende Mantel von Hand mit einem Messer durchtrennt und auf einer vorgegebenen Länge entfernt. Bei dieser Aktion kann der Außenleiter leicht durch das Messer beschädigt werden. Außerdem ist das Einhalten der Länge, auf welcher der Mantel zu entfernen ist, bei dieser Arbeitsweise oft problematisch.

Der Erfindung liegt die Aufgabe zugrunde, eine Vorrichtung zum Bearbeiten des Endes eines koaxialen HF-Kabels anzugeben, die einfach zu handhaben ist und bei deren Einsatz der Mantel auf vorgegebener Länge maßgenau vom Außenleiter entfernt wird.

Diese Aufgabe wird bei einer Vorrichtung der eingangs geschilderten Art durch die Verwendung eines topfartigen Geräts mit einem zylindrischen Hohlraum gelöst, bei welchem
- der Durchmesser des Hohlraums eines am offenen Ende des Geräts liegenden Eingangsbereichs dem Durchmesser des HF-Kabels einschließlich Mantel entspricht,
- an dem innerhalb des Geräts liegenden Ende des Eingangsbereichs mindestens ein zum Durchtrennen des Mantels bestimmtes Mantelmesser angebracht ist, das mit seiner Schneide in den Hohlraum hineinragt,
- der Durchmesser des Hohlraums hinter dem Eingangsbereich dem Außendurchmesser des Außenleiters des HF-Kabels entspricht,
- am verschlossenen Ende des Geräts mindestens ein Messer angebracht ist, dessen Schneide zum Durchtrennen von Außenleiter, Dielektrikum und Innenleiter des HF-Kabels in den Hohlraum hineinragt, und
- zentral im Hohlraum ein sich in dessen Achsrichtung erstreckender, zylindrischer Stift angebracht ist, dessen Außendurchmesser dem Innendurchmesser des hohlen Innenleiters des HF-Kabels entspricht.

Zum maßgenauen Absetzen des Endes eines HF-Kabels wird dieses Gerät stirnseitig auf dasselbe aufgesetzt. Dabei dient der zentrale Stift als Führungshilfe. Bei einer Drehung der Vorrichtung um ihre Achse und gleichzeitigem axialem Druck in Richtung des HF-Kabels schneidet das Mantelmesser den Mantel wendelförmig auf. Der dabei entstehende Span wird vom Außenleiter des HF-Kabels abgehoben und durch eine Öffnung des Geräts im Bereich des Mantelmessers entfernt. Dabei wird das Gerät axial immer weiter auf das HF-Kabel geschoben, bis dasselbe am Boden des verschlossenen Endes des Geräts anstößt. Von dem an dieser Stelle befindlichen Messer wird dann ein Schnitt durchgeführt, mit dem das Ende des HF-Kabels in einer Ebene plan durchtrennt wird. Gleichzeitig geht der Schnitt des Mantelmessers in einen Rundschnitt über. Der Mantel ist dann auf einer durch die Vorrichtung vorgegebenen Länge vom Außenleiter des HF-Kabels entfernt. Das Ende des HF-Kabels ist zur Montage eines Steckers vorbereitet.

Ein Ausführungsbeispiel des Erfindungsgegenstandes ist in den Zeichnungen dargestellt.

Es zeigen:

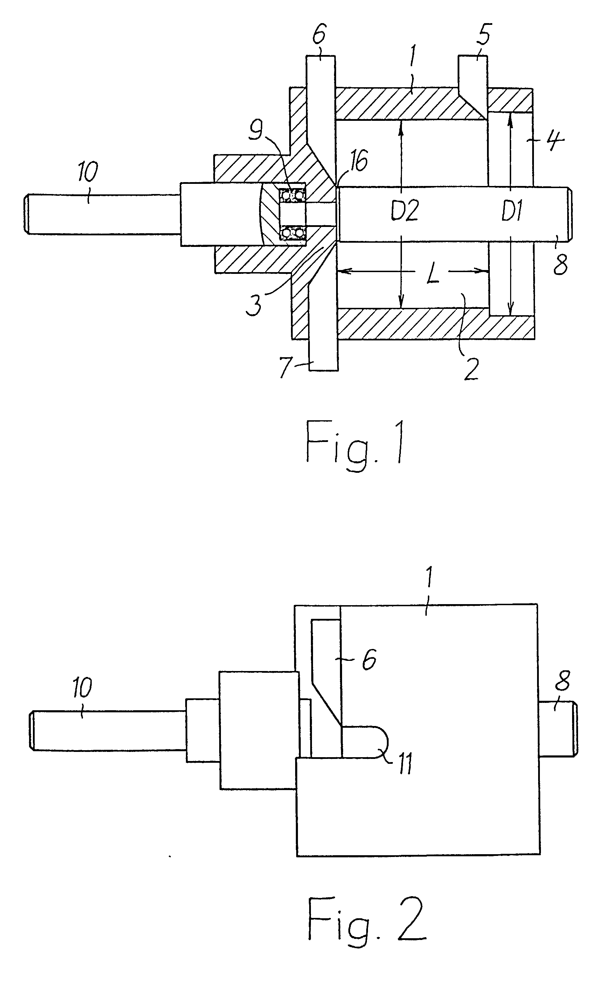

Fig. 1 einen Querschnitt einer Vorrichtung nach der Erfindung.

Fig. 2 eine Seitenansicht der Vorrichtung.

Fig. 3 die Vorrichtung nach Fig. 1 auf einem abgesetzten Ende eines HF-Kabels.

In den Zeichnungen ist die Vorrichtung nur schematisch dargestellt. Einzelheiten, die für das Verständnis der Erfindung nicht erforderlich sind, fehlen. Das gilt beispielsweise für die Befestigung der Messer, die mit Vorzug leicht austauschbar montiert sind.

Die Vorrichtung zum Absetzen des Endes eines HF-Kabels besteht aus einem topfartigen Gerät 1 mit einem zylindrischen Hohlraum 2, einem Boden 3 und einer Öffnung 4. An dem Gerät 1 sind ein Mantelmesser 5 und zwei Messer 6 und 7 beispielsweise mittels Schrauben befestigt, die mit ihren Schneiden in den Hohlraum 2 hineinragen. Innerhalb des Gerätes 1 ist zentral ein Stift 8 befestigt, der in Achsrichtung des Gerätes 1 verläuft und in bevorzugter Ausführungsform über dasselbe hinausragt. Der Stift 8 kann außerdem im Bereich des Bodens 3 des Gerätes 1 an einer Lagerstelle 9 um seine Achse drehbar gelagert sein. Auf der der Öffnung 4 abgewandten Seite des Gerätes 1 kann an demselben außerdem ein in Achsrichtung nach außen abstehender Bolzen 10 zentral befestigt sein, mit dem das Gerät 1 beispielsweise in eine Bohrmaschine eingesteckt werden kann.

Im Bereich des Bodens 3 des Geräts 1 ist mindestens eines der Messer 6 oder 7 angebracht. Vorzugsweise werden beide Messer 6 und 7 eingesetzt, die einander diametral gegenüberliegen. Im Bereich der Messer 6 und 7 ist die Wandung des Gerätes 1 mindestens an einer Stelle 11 durchbrochen, so daß der Hohlraum 2 erkennbar ist.

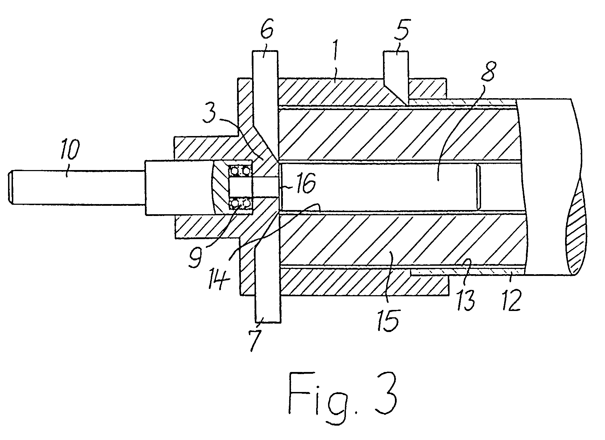

Das Gerät 1 entspricht in seinen Abmessungen den Abmessungen eines HF-Kabels, dessen Ende maßgenau bearbeitet werden soll. Der Hohlraum 2 hat an der Öffnung 4 einen Eingangsbereich, dessen Durchmesser D1 dem Außendurchmesser des zu behandelnden und in Fig. 3 mit eingezeichneten HF-Kabels einschließlich dessen Mantel 12 entspricht. Die axiale Länge des Eingangsbereichs ist kurz im Verhältnis zur axialen Länge des Geräts 1. Am innen liegenden Ende des Eingangsbereichs ragt das Mantelmesser 5 mit seiner Schneide so weit in den Hohlraum 2 hinein, daß der Mantel 12 des HF-Kabels gerade durchtrennt, der Außenleiter 13 desselben aber nicht berührt wird.

Der an den Eingangsbereich des Hohlraums 2 anschließende, axial wesentlich längere Bereich desselben hat einen Durchmesser D2, welcher dem Außendurchmesser des Außenleiters 13 des HF-Kabels entspricht. Dieser Bereich hat eine Länge L, welche der für einen am HF-Kabel zu montierenden Stecker entsprechenden Länge entspricht, auf der ein vom Mantel 12 befreiter, blanker Außenleiter 13 benötigt wird.

Die Vorrichtung nach der Erfindung wird beispielweise wie folgt gehandhabt:

Das Gerät 1 wird auf das Ende eines HF-Kabels aufgesetzt und in axialer Richtung gegen dasselbe gedrückt. Dabei dringt der Stift 8 als Führungshilfe in den Innenleiter 14 des HF-Kabels ein. Der Mantel 4 legt sich an die Wandung des Gerätes 1 in dessen Eingangsbereich an. Sobald das HF-Kabel bzw. dessen Mantel 12 bis zum Mantelmesser 5 gelangt sind, wird das Gerät 1 gedreht. Bei gleichzeitigem Druck auf dasselbe in axialer Richtung wird der Mantel 12 durch das Mantelmesser 5 abgeschält. Das Gerät 1 wird weiter auf das HF-Kabel aufgeschoben, bis dessen Stirnseite in den Bereich der Messer 6 und 7 gelangt. Diese durchtrennen den Außenleiter 13, das Dielektrikum 15 und den Innenleiter 14 des HF-Kabels und erzeugen eine plane Stirnfläche an demselben. Das kann durch die Öffnung an der Stelle 11 kontrolliert werden. Damit der Innenleiter 14 vollständig durchtrennt werden kann, ist es zweckmäßig, den Stift 8 im Bereich der Messer 6 und 7 mit einer umlaufenden Nut 16 zu versehen.

Die Handhabung des Geräts 1 wird durch die drehbare Lagerung des Stifts 8 einerseits und durch den Einsatz von zwei, einander diametral gegenüber liegenden Messern 6 und 7 erleichtert. Es können im Bereich des Bodens 3 auch mehr als zwei Messer eingesetzt werden, die vorzugsweise mit gleichbleibendem Abstand zu einander, in Umfangsrichtung versetzt sind. Mit Vorteil kann das Gerät 1 maschinell, beispielsweise durch eine Bohrmaschine, gedreht werden.

## Patentansprüche

1. Vorrichtung zum Bearbeiten des Endes eines koaxialen Hochfrequenz-Kabels, das einen rohrförmigen Innenleiter, ein denselben umgebendes Dielektrikum, einen über demselben konzentrisch zum Innenleiter angeordneten, rohrförmigen Außenleiter und einen den Außenleiter umgebenden Mantel aus Isoliermaterial aufweist,
**gekennzeichnet durch** die Verwendung eines topfartigen Geräts (1) mit einem zylindrischen Hohlraum (2), bei welchem
- der Durchmesser (D1) des Hohlraums (2) eines am offenen Ende des Geräts (1) liegenden Eingangsbereichs dem Durchmesser des Hochfrequenz-Kabels einschließlich Mantel (12) entspricht,
- an dem innerhalb des Geräts (1) liegenden Ende des Eingangsbereichs mindestens ein zum Durchtrennen des Mantels (12) bestimmtes Mantelmesser (5) angebracht ist, das mit seiner Schneide in den Hohlraum (2) hineinragt,
- der Durchmesser (D2) des Hohlraums (2) hinter dem Eingangsbereich dem Außendurchmesser des Außenleiters (13) des Hochfrequenz-Kabels entspricht,
- am verschlossenen Ende des Geräts (1) mindestens ein Messer (6,7) angebracht ist, dessen Schneide zum Durchtrennen von Außenleiter (13), Dielektrikum und Innenleiter des Hochfrequenz-Kabels in den Hohlraum (2) hineinragt, und
- zentral im Hohlraum (2) ein sich in dessen Achsrichtung erstreckender, zylindrischer Stift (8) angebracht ist, dessen Außendurchmesser dem Innendurchmesser des hohlen Innenleiters (14) des Hochfrequenz-Kabels entspricht.

2. Vorrichtung nach Anspruch 1, **dadurch gekennzeichnet**, daß der Stift (8) aus dem Gerät (1) herausragt.

3. Vorrichtung nach Anspruch 1 oder 2, **dadurch gekennzeichnet**, daß der Stift (8) drehbar im Gerät (1) gelagert ist.

4. Vorrichtung nach einem der Absprüche 1 bis 3, **dadurch gekennzeichnet**, daß die Wandung des Geräts (1) im Bereich seines verschlossenen Endes zumindest an einer Stelle (11) bis zum Hohlraum (2) hin durchbrochen ist.

5. Vorrichtung nach einem der Ansprüche 1 bis 4, **dadurch gekennzeichnet**, daß am verschlossenen Ende des Geräts (1) zwei einander diametral gegenüber liegende Messer (6,7) angebracht sind.

6. Vorrichtung nach einem der Ansprüche 1 bis 5, **dadurch gekennzeichnet**, daß der Eingangsbereich axial kurz ist im Verhältnis zur axialen Länge des Geräts (1).

7. Vorrichtung nach einem der Ansprüche 1 bis 6, **dadurch gekennzeichnet**, daß an dem Gerät (1) ein in seiner Achse liegender, nach außen abstehender Bolzen (10) angebracht ist.
